# EUROPEAN PATENT APPLICATION

(11) **EP 2 339 819 A1**
(43) Date of publication of application: **29.06.2011**
(21) Application number: 09821775.5
(22) Date of filing: 19.10.2009
(51) Int. Cl.: H04M 1/02

(54) **DEVICE AND METHOD FOR DETECTING STATE IN MOBILE DEVICE**

(30) Priority: 20.10.2008 JP 2008269307
(71) Applicant: NEC Corporation, Minato-ku Tokyo 108-8001 (JP)
(72) Inventor: NAGASAWA, Makoto, Tokyo 108-8001 (JP)
(74) Representative: Vossius & Partner
(86) International application number: PCT/JP2009/005441
(87) International publication number: WO 2010/047075

(57) **Abstract**

A device and method are provided that can detect a state when the relative positions of two cases of a portable device are changed by a form of motion other than simple rotation or shift. In a portable device including a joint mechanism that joins first and second cases in such a manner that the relative positions of the first and second cases can be changed by rotation and shift between a plurality of predetermine positions, the positional state of the first and second cases is determined based upon a plurality of magnets (M1, M2) placed in the first case at a predetermined distance apart from each other in width direction, upon a plurality of magnetic sensors (H1, H2) for sensing the magnetism from the magnets, placed in the second case at a predetermined distance apart from each other in length direction, and upon sensed output of the plurality of magnetic sensors.

## Description

### [Technical Field]

The present invention relates to a portable device typified by a mobile telephone, PDA (Personal Digital Assistant) or the like and, more particularly, to a device and method for detecting a change in shape of a device.

### [Background Art]

Mobile terminals of recent years can change their terminal shapes in various ways, and liquid crystal display parts thereof are not only opened/closed but can be rotated to be horizontally oriented or can be closed with a display externally faced. For such mobile terminals that can intricately change in shape, many shape detection schemes using a magnet and a magnetic sensor are adopted to determine their current shapes.

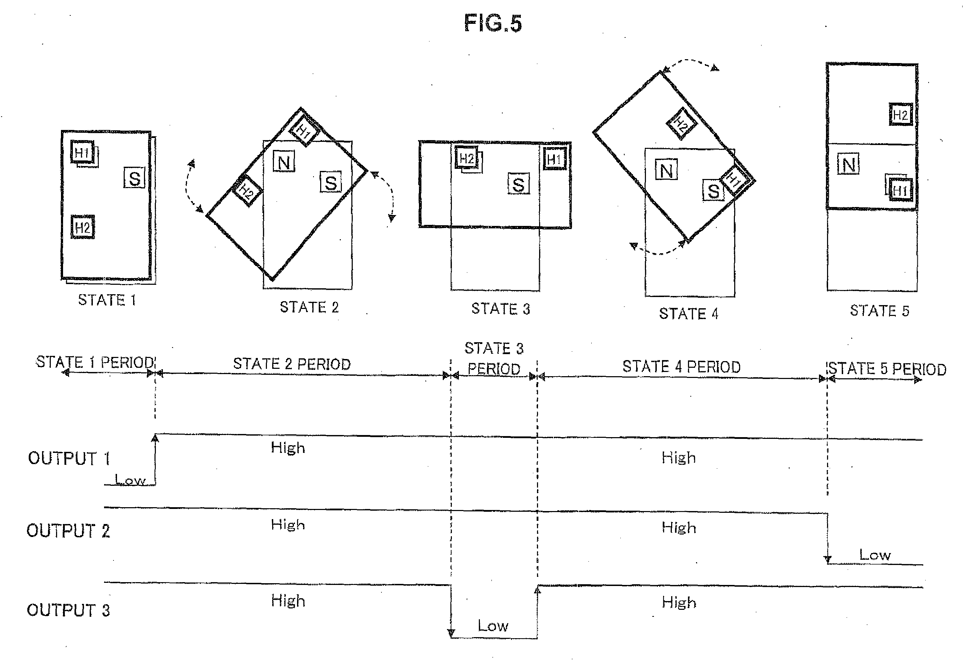

For example PTL 1 discloses a method for detecting the position of a mobile terminal in which a movable part having a liquid crystal display part can be rotated within a ±90º range relative to a fixed part. In this mobile terminal, two magnets are placed in the movable part 90º apart from each other, and two magnetic sensors are placed in the fixed part similarly 90º apart from each other. With this configuration, it is possible to detect four states, which are three positions of -90º, 0º, and + 90º and transition between these positions (see paragraphs 0045 to 0052 and FIGS. 5 to 7 of PTL 1).

### [Citation List]

### [Patent Literature]

[PTL 1]
   Javanese Patent Application Unexamined Publication No. 2008-067335

### [Summary of Invention]

### [Technical Problem]

However, the position detection method disclosed in PTL 1 is applicable only to mobile terminals in which a movable part can be ±90º rotated around a center of rotation and cannot be applies when a movable part takes more intricate forms of motion relative to a fixed part.

An object of the present invention is to provide a state detection device and method that can detect a state when the relative positions of two cases are changed by a form of motion other than simple rotation or simple shift, as well as a portable device using the same.

### [Solution to Problem]

A state detection device according to the present invention is a state detection device for detecting a positional state of a first case and a second case in a portable device, wherein the portable device includes the first case, the second case, and a joint mechanism joining the first and second cases in such a manner that relative positions of the first and second cases can be changed by rotation and shift between a plurality of predetermined positions, which is characterized by comprising: a plurality of magnetism generation means placed in the first case at a predetermined distance apart from each other in width direction; a plurality of magnetic sensing means for sensing magnetism from the magnetism generation means, placed in the second case at a predetermined distance apart from each other in length direction; and a state determination means that determines the positional state of the first and second cases, based on sensed outputs from the plurality of magnetic sensing means.

A state detection method according to the present invention is a state detection method for detecting a positional state of a first case and a second case in a portable device, wherein the portable device includes the first case, the second case, and a joint mechanism joining the first and second cases in such a manner that relative positions of the first and second cases can be changed by rotation and shift between a plurality of predetermined positions, which is characterized by comprising: detecting magnetism from a plurality of magnetism generation means placed in the first case at a predetermined distance apart from each other in width direction by using a plurality of magnetic sensing means placed in the second case at a predetermined distance apart from each other in length direction; and determining the positional state of the first and second cases, based on sensed outputs from the plurality of magnetic sensing means.

A portable device according to the present invention is a portable device which is characterized by comprising: a first case; a second case; a joint mechanism joining the first and second cases in such a manner that relative positions of the first and second cases can be changed by rotation and shift between a plurality of predetermined positions; a plurality of magnetism generation means placed in the first case at a predetermined distance apart from each other in width direction; a plurality of magnetic sensing means for sensing magnetism from the magnetism generation means, placed in the second case at a predetermined distance apart from each other in length direction; and a state determination means that determines a positional state of the first and second cases, based on sensed outputs from the plurality of magnetic sensing means.

### [Advantageous Effects of Invention]

According to the present invention, it is possible to detect a state when the relative positions of two cases are changed by a form of motion other than simple rotation or simple shift.

### [Brief Description of Drawings]

[FIG. 1]

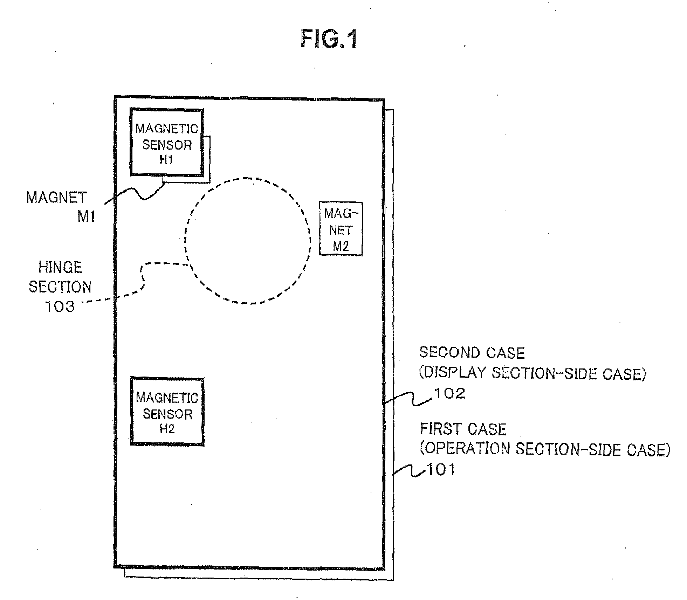

   FIG. 1 is a plane diagram schematically showing a case structure of a portable device according to an example of the present invention.
[FIG. 2]

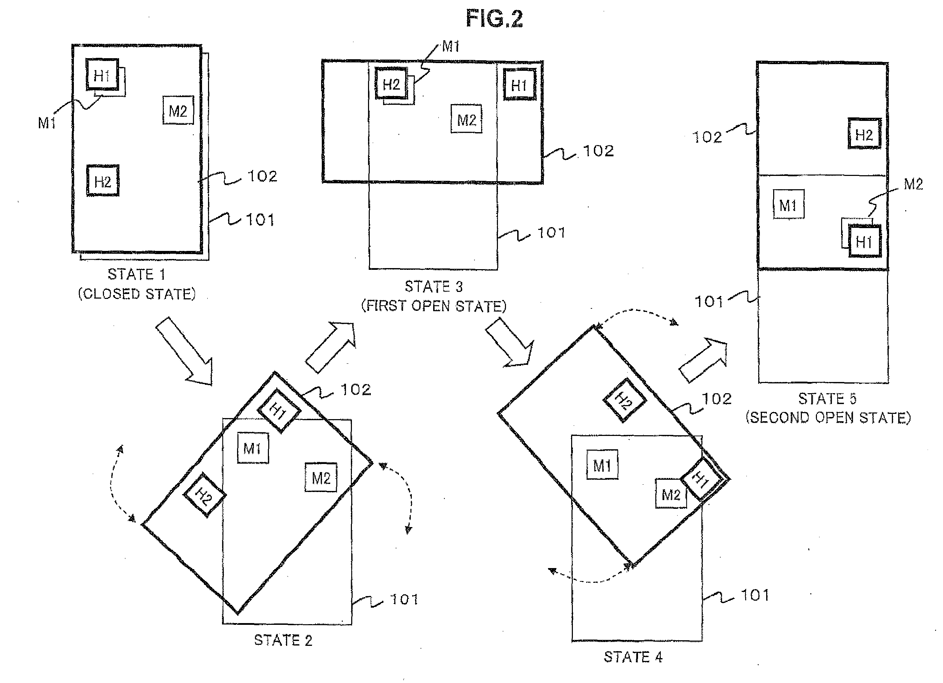

   FIG. 2 is a diagram schematically showing changes in state of the portable device according to the example of the present invention.
[FIG. 3]

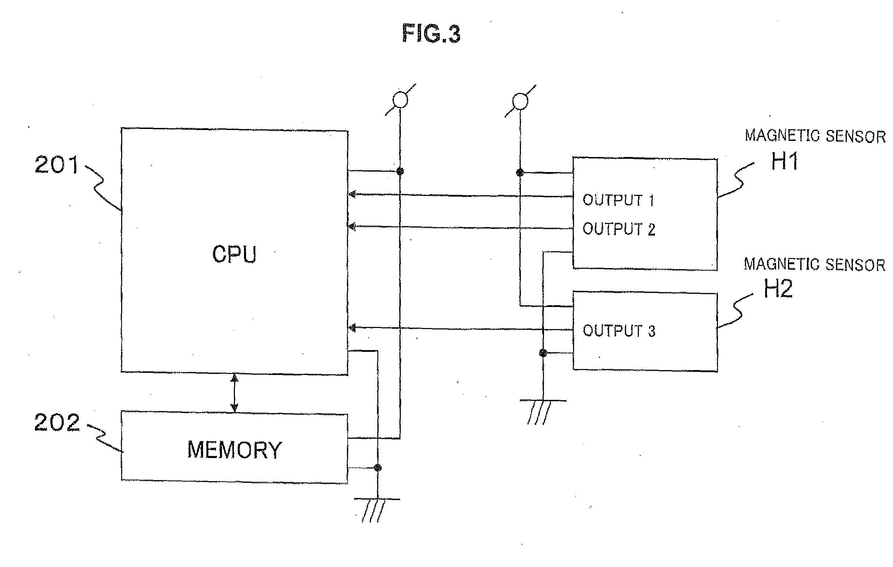

   FIG. 3 is a circuit diagram schematically showing a circuit for detecting the state of the portable device according to the example of the present invention.
[FIG. 4]

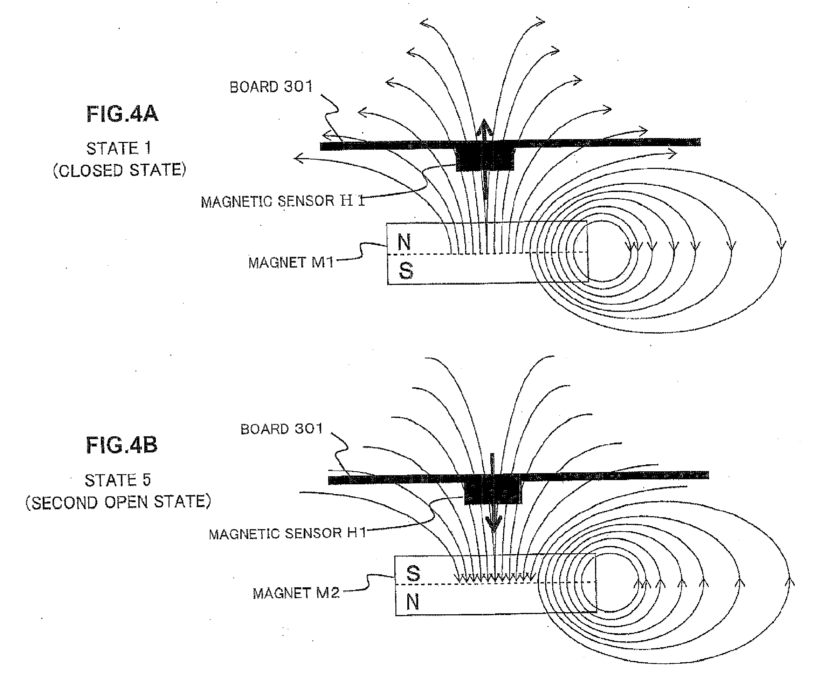

   FIG. 4A is a schematic diagram of magnetic force lines in a state 1 in which a magnetic sensor H1 is superposed on a magnet M1, viewed from the side, and FIG. 4B is a schematic diagram of magnetic force lines in a state 5 in which the magnetic sensor H1 is superposed on a magnet M2, viewed from the side.
[FIG. 5]
   FIG. 5 is a diagram of output waveforms from the magnetic sensors H1 and H2 that enable detection of the state of the portable device.
[FIG. 6]

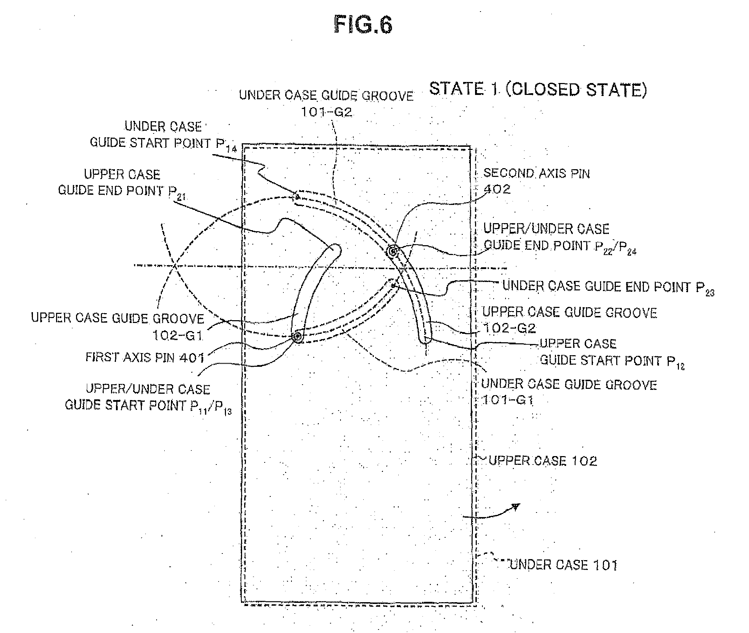

   FIG. 6 is a plane transparent diagram showing a closed state of a hinge mechanism of the portable device according to the present example.
[FIG. 7]

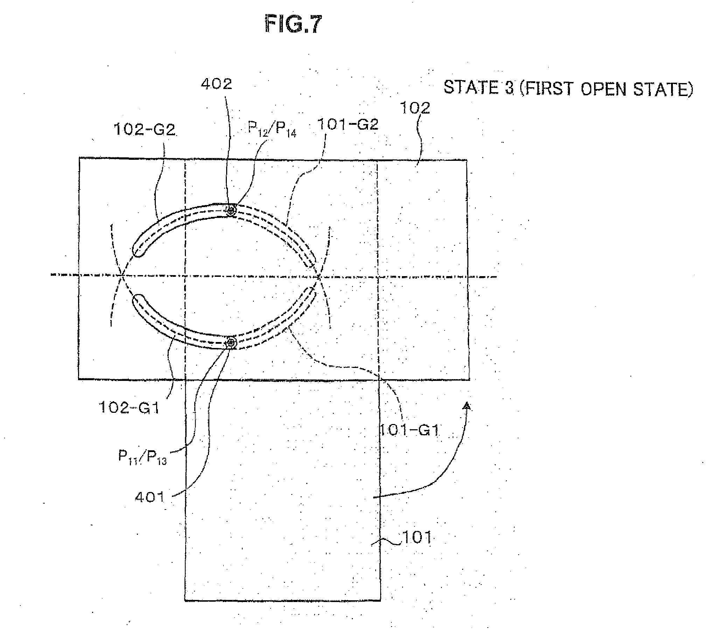

   FIG. 7 is a plane transparent diagram showing a first open state of the hinge mechanism of the portable device according to the present example.
[FIG. 8]

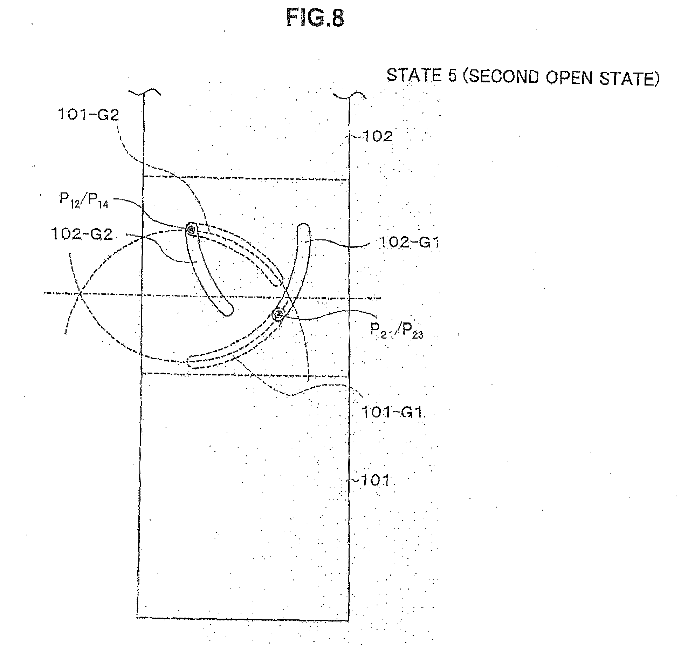

   FIG. 8 is a plane transparent diagram showing a second open state of the hinge mechanism of the portable device according to the present example.

### [Description of Embodiments]

### 1. Configuration

FIG. 1 is a plane diagram schematically showing the case structure of a portable device according to an example of the present invention. The portable device according to the present example has a structure in which a first case 101 and a second case 102 both in substantially rectangular shape are joined by a hinge section 103. In the present example, the first case 101 is provided with an operation section (not shown) including keys and the like and therefore will be referred to as "operation section-side case 101" hereinafter. The second case 102 is provided witch a display section (not shown) including a liquid crystal display (LCD) and the like and therefore will be referred to as "display section-side case 102" hereinafter. However, these names are not limitative. Since the second case is rotatably superposed on the first case, the first case 101 may also be called "under case, " and the second case 102 may also be called "upper case."

Note that although the operation section-side case 101, which is shown by a thin solid line, and the display section-side case 102, which is shown by a heavy solid line, are depicted in a slightly staggered manner, this is to illustrate that the cases 101 and 102 are layered and does not necessarily mean that the cases 101 and 102 of the portable device arse positionally misaligned as they look. It is also possible to make a structure such that all faces of the operation section-side case 101 are covered by the display section-side case 102 or such that at least the operation section of the operation section-side case 101 is covered by the display section-side case 102.

The hinge section 103 has a structure enabling the display section-side case 102 to sequentially change its position into a plurality of states relative to the operation section-side case 101. Here, the operation section side case 101 and display section-side case 102 are joined to each other in such a manner as to be rotatable around two axes. With this joint mechanism, it is assumed that the position of the display section-side case 102 can be sequentially changed by rotation and shift into three predetermined states relative to the operation section-side case 101, namely, a closed state, a first open state in which a screen is horizontally oriented and the two cases are orthogonal to each other, and a second open state in which a screen is vertically oriented. A specific example, of the hinge section 103 will be described later.

Moreover, in the operation section-side case 101, magnets M1 and M2 serving as magnetism generation sections are placed at a predetermined distance apart from each other in a staggered manner, with the hinge section 103 between them in width direction. Further, in the display section-side case 102, magnetic sensors H1 and H2 serving as magnetic sensing sections are placed at a predetermined distance apart from each other in length direction, along one of the longer sides of the case. One of the magnetic sensors H1 and H2 (here, the magnetic sensor H1) is configured to be able to sense both the presence/absence of a magnetic field and the direction thereof, which will be described later. Note that it is also possible to place more than two magnets in the operation section-side case 101 in width direction and more than two magnetic sensors in the display section-side case 102 in length direction.

The two magnets M1 and M2 and two magnetic sensors H1 and H2 are placed in such a manner that a combination of them in superposition varies with a change in the relative positions of the operation section-side case 101 and display section-side case 102. Hereinafter, operation according to the present example will be described in detail.

### 2. Operation

FIG. 2 is a diagram schematically showing changes in state of the portable device according to the example of the present invention, When the display section-side case 102 is in a state 1 (the closed state) relative to the operation section-side case 102, the magnet M1 in the operation section-side case 101 and the magnetic sensor H1 in the display section-side case 102 are superposed, and the other magnet M2 and magnetic sensor H2 are away from each mother. Accordingly, the magnetic sensor H1 senses magnetism, while the magnetic sensor H2 senses no magnetism.

When the display section-side case 102 is rotated (either clockwise or counterclockwise) as shown in a state 2, which is a middle state, and falls in a state 3 (the first open state or in a T-shape) in which the display section has a horizontally oriented screen and the length directions of the operation section-side case 101 and display section-side case 102 are orthogonal to each other, the magnet M1 and the magnetic sensor H2 are superposed, and the other magnet M2 and magnetic sensor H1 are away from each other. Accordingly, the magnetic sensor H2 senses magnetism, while the magnetic sensor H1 senses no magnetism.

When the display section-side case 102 is further rotated (either clockwise or counterclockwise) as shown in a state 4, which is a middle state, and falls in a state 5 (the second open state) in which the display section has a vertically oriented screen and the length directions of the operation section-side case 101 and display section-side case 102 are aligned in the same direction, the magnet M2 and the magnetic sensor H1 are superposed, and the other magnet M1 and magnetic sensor H2 are away from each other. Accordingly, the magnetic sensor H1 senses magnetism, while the magnetic sensor H2 senses no magnetism.

According to the placement of the magnets M1 and M2 and magnetic sensors H1 and H2 in the present example, the magnetic sensor H1 senses the magnetism of the magnets M1 and M2 in the states 1 and 5, respectively. Accordingly, only the magnetic sensor H1 is a sensor capable of distinguishably sensing both of south and north poles, and the magnets M1 and M2 are configured to each have a south or north pole different from each other, whereby it is possible to distinguish the states 1 and 5. In the present example, a configuration is made such that one of the magnetic sensors H1 and H2 senses magnetism in the state 1 (closed state), state 3 (first open state), or state 5 (second open state). Incidentally, the states 2 and 4 are the middle states between the states 1 and 3 and between the states 3 and 5, respectively, and are states in which neither of the magnetic sensors senses magnetism.

FIG. 3 is a circuit diagram schematically showing a circuit for detecting the state of the portable device according to the example of the present invention. Here, a program-controlled processor (here, a CPU [Central Processing Unit] ) 2 01 in the portable device executes a program in a memory 202 and monitors outputs 1 to 3 of the magnetic sensors H1 and H2, thereby determining which one of the states 1 to 5 shown in FIG. 2 the portable device is in.

The magnetic sensor H1 is a sensor capable of distinguishably sensing both of south and north poles as described above, and, for example, a hall element is used. The magnetic sensor H1 has a two-output system with outputs 1 and 2 and, when sensing the north pole of a magnet, changes the output 1 from high to low. Similarly, when sensing the south pole of a magnet, the magnetic sensor H1 changes the output 2 from high to low.

The magnetic sensor H2 has a one-output system with an output 3 and, when sensing any one of south and north poles (whichever pole) , changes the output 3 from high to low. Note that when sensing no magnetism, any outputs of the magnetic sensors H1 and H2 are assumed to be high.

FIG. 4A is a schematic diagram of magnetic force lines in the state 1 in which the magnetic sensor H1 is superposed on the magnet M1, viewed from the side, and FIG. 4B is a schematic diagram of magnetic force lines in the state 5 in which the magnetic sensor H1 is superposed on the magnet M2, viewed from the side. A board 301 is one on which electric parts incorporated inside the display section-side case 102 are mounted and has the magnetic sensor H1 mounted thereon at a predetermined place.

In the state 1 shown in FIG. 4A, the magnetic sensor H1 and the north pole of the magnet M1 face each other, so that the magnetic sensor H1 senses north polar magnetism and changes the output 1 from high to low, while keeping the output 2 high. On the other hand, in the state 5 shown in FIG. 4B, the magnetic sensor H1 and the south pole of the magnet M2 face each other, so that the magnetic sensor H1 senses south polar magnetism and changes the output 2 from high to low, while keeping the output 1 high. Since the output 1 or 2 of the magnetic sensor H1 becomes low depending on the direction of magnetic force lines in this manner, it is possible to distinguish between south and north poles.

FIG. 5 is a diagram of output waveforms from the magnetic sensors H1 and H2 that enable detection of the state of the portable device. Here, it is assumed that a side of the magnet M1 facing the display section-side case 102 is configured to be a north pole and that a side of the magnet M2 facing the display section-side case 102 is configured to be a south pole.

First, in the state 1 (closed state), the output 1 is low and the output 2 is high because the magnetic sensor H1 senses the north pole of the magnet M1, while the output 3 is high because the magnetic sensor H2 senses no magnetism. Accordingly, the CPU 201 can determine that the portable device is in the state 1 when (output 1, output 2, output 3) = (0, 1, 1).

In the state 2 during the transition from the state 1 to the state 3, all of the outputs 1 to 3 are high because neither the magnetic sensor H1 nor H2 can sense the magnetism of the magnets M1 and M2. Accordingly, the CPU 2 01 can determine that the portable device is in the middle state when (output 1, output 2 , output 3) = (1, 1, 1). In this case, if the previous state (state 1) is memorized, the state can be determined to be the state 2.

In the state 3 (first open state), the output 3 is low because the magnetic sensor H2 senses the north pole of the magnet M1, while the outputs 1 and 2 are both high because the magnetic sensor H1 senses no magnetism. Accordingly, the CPU 201 can determine that the portable device is in the state 3 when (output 1, output 2, output 3) = (1, 1, 0).

In the state 4 during the transition from the state 3 to the state 5, all of the outputs 1 to 3 are high because neither the magnetic sensor H1 nor H2 can sense the magnetism of the magnets M1 and M2. Accordingly, since (output 1, output 2, output 3) = (1, 1, 1), the CPU 201 can determine that the portable device is in the middle state (here, the state 4 or 2).

In the state 5 (second open state), the output 1 is high and the output 2 is low because the magnetic sensor H1 senses the south pole of the magnet M2, while the output 3 is high because the magnetic sensor H2 sense no magnetism. Accordingly, the CPU 201 can determine that the portable device is in the state 5 when (output 1, output 2, output 3) = (1, 0, 1).

The CPU 201 can determine every one of the states 1 to 5 by monitoring changes in the outputs 1 to 3 made following a series of the above-described operations. According to the present example in particular, it is possible to know that the portable device is in the middle state by detecting (output 1. output 2, output 3) = (1, 1, 1). Therefore, during the middle state, it is possible to mute a displayed screen on the display section or to detect a timing to perform processing for rotating a screen display and the like. Moreover, it is also possible to perform other processing than the processing regarding a screen display on the display section. In addition, since there is no period of time when the state cannot be determined, it is not necessary to bring processing executed inside the portable device into a queue state, making it possible to efficiently perform processing.

Note that the above-described placement of the magnetic sensors H1 and H2 and magnets M1 and M2 is an example and can be freely changed unless there are constraints in mounting of components. Moreover, the shape of the portable device and changes (transition) in shape thereof are examples, and the present invention is applicable if the shape of a portable device has three or more stationary states.

### 3. Effects

As described above, according to the present example, the two magnets M1 and M2 and two magnetic sensors H1 and H2 are placed in such a manner that a combination of them in superposition varies with the relative positions of the operation section-side case 101 and display section-side case 102. Thereby, it is possible to detect the three predetermined states, which are the closed state, the first open state with a screen horizontally oriented, and the second open state with a screen vertically oriented, as well as the middle states between these states when the display section-side case 102 is sequentially changed in position relative to the operation section-side case 101. As described above, according to the present example, it is possible to detect every state of the positions of the cases, with a minimum configuration, namely, with a circuit that determines the positions by using two magnetic sensors, two magnets, and sensor outputs.

### 4. Hinge mechanism

Next, a description will be given of an example of the configuration and operation of the hinge section 103 of the portable device according to the present example. However, the present invention is not limited to this hinge mechanism and is applicable to any hinge mechanism as long as the hinge mechanism allows the cases to change their positions between the above-described states 1 to 5.

Hereinafter, the first case 101 and second case 102 will be referred to as the under case 101 and upper case 102, respectively. As described above, with the hinge section 103, the position of the upper case 102 relative to the under case 101 can be sequentially changed, via the middle states, into the three predetermined states, which are the closed state (state 1), the first open state (state 3) with a screen horizontally oriented, and the second open state (state 5) with a screen vertically oriented. Hereinafter, the states of the hinge section 103 in the respective predetermined states will be described with reference to the drawings.

FIG. 6 is a plane transparent diagram showing the closed state of the hinge mechanism of the portable device according to the present example. The hinge section 103 has a pair of guide grooves 101-G1 and 101-G2 provided on the under case 101 (shown by broken lines), a pair of guide grooves 102-G1 and 102-G2 provided on the upper case 102 (shown by solid lines), a first axis pin 401 that penetrates the under case guide groove 101-G1 and upper case guide groove 102-G1 and restricts the movements of the under and upper cases in thickness direction, and a second axis pin 401 that penetrates the under case guide groove 101-G2 and upper case guide groove 102-G2 and restricts the movements of the under and upper cases in thickness direction.

The under case guide groove 101-G1 is formed along an arc of a circle around a guide start point P₁₄ that is one end of the under case guide groove 101-G2, the arc having a length of not greater than one fourth (here, one eighth) of the circumference of the circle, around the start point P₁₄. Similarly, the under case guide groove 101-G2 is formed along an arc of a circle around a guide start point P₁₃ that is one end of the under case guide groove 101-G1, the arc having a length of not greater than one fourth (here, one eighth) of the circumference of the circle around the start point P₁₃. Moreover, the radius of the circle around the start point P₁₄ is the same as the radius of the circle around the start point P₁₃. That is, the under case guide grooves 101-G1 and 101-G2 have the same length and the same curvature.

The upper case guide groove 102-G1 is formed along an arc of a circle around a guide start point P₁₂ that is one end of the upper case guide groove 102-G2, the arc having a length of not greater than one fourth (here, one eighth) of the circumference of the circle around the start point P₁₂. Similarly, the upper case guide groove 102-G2 is formed along an arc of a circle around a guide start point P₁₁ that is one end of the upper case guide groove 102-G1, the arc having a length of not greater than one fourth (here, one eighth) of the circumference of the circle around the start point P₁₁, Moreover, the radius of the circle around the start point P₁₂ is the same as the radius of the circle around the start point P₁₁. That is, the upper case guide grooves 102-G1 and 102-G2 have the same length and the same curvature.

In the closed state shown in FIG. 6, the start point P₁₁ of the upper case guide groove 102-G1 coincides with the start point P₁₃ of the under case guide groove 101-G1. Moreover, an end point P₂₂ of the upper case guide groove 102-G2 coincides with an end point P₂₄ of the under case guide groove 101-G2. Note that an end point means the other end than the start point of each guide groove.

In the closed state shown in FIG. 6, the first axis pin 401 is present at the start point P₁₁ of the upper case guide groove 102-G1 and the start point P₁₃ of the under case guide groove 101-G1 that coincide with each other as described above. More specifically, the first axis pin 401 is located at a point where the two start points P₁₁ and P₁₃ are superposed and is temporarily latched by a latch mechanism (not shown).

On the other hand, the second axis pin 402 is present at the end point P₂₂ of the upper case guide groove 102-G2 and the end point P₂₄ of the under case guide groove 101-G2 that coincide with each other as described above. More specifically, the second axis pin 402 is locate at a point where the two end points P₂₂ and P₂₄ are superposed and is temporarily latched by a latch mechanism (not shown).

FIG. 7 is a plane transparent diagram showing the first open state of the hinge mechanism of the portable device according to the present example. The first open state (state 3) is a state in which the length directions of the under case 101 and upper case 102 are orthogonal to each other. In the first open state, the start point P₁₁ of the upper case guide groove 102-G1 coincides with the start point P₁₃ of the under case guide groove 101-G1. Moreover, the start point P₁₂ of the upper case guide groove 102-G2 coincides with the start point P₁₄ of the under case guide groove 101-G2.

The positional relationship between the first axis pin 401 and second axis pin 402 becomes as follows. The first axis pin 401, which is located in the closed state at the point where the start point P₁₁ of the upper case guide groove 102-G1 and the start point P₁₃ of the under case guide groove 101-G1 are superposed, does not change in location during the course of the transition from the closed state to the first open state and consistently stays at the point where the start points P₁₁ and P₁₃ are superposed.

On the other hand, the second axis pin 402, which is temporarily latched in the closed state at the point where the end point P₂₂ of the upper case guide groove 102-G2 and the end point P₂₄ of the under case guide groove D10-G2 are superposed, is unlatched during the course of the transition from the closed state to the first open state and moves ultimately to a point where the start point P₁₂ of the upper case guide groove 102-G2 and the start point P₁₄ of the under case guide groove 101-G2 are superposed. Further, the second axis pin 402 that has moved to the point where the start point P₁₂ of the upper case guide groove 102-G2 and the start point P₁₄ of the under case guide groove 101-G2 are superposed is temporarily latched by a latch mechanism (not shown).

FIG. 8 is a plane transparent diagram showing the second open state of the hinge mechanism of the portable device according to the present example. The second open state (state 5) is an open state in which the length directions of the under case 101 and upper case 102 are aligned. In the second open state, the end point P₂₁ of the upper case guide groove 102-G1 coincides with the end point P₂₃ of the under case guide groove 101-G1. Moreover, the start point P₁₂ of the upper case guide groove 102-G2 coincides with the start point P₁₄ of the under case guide groove 101-G2.

The positional relationship between the first axis pin 401 and second axis pin 402 becomes as follows. The first axis pin 401, which is temporarily latched in the first open state at the point where the start point P₁₁ of the upper case guide groove 102-G1 and the start point P₁₃ of the under case guide groove 101-G1 are superposed, is unlatched during the course of the transition from the first open state to the second open state, moves ultimately to a point where the end point P₂₁ of the upper case guide groove 102-G1 and the end point P₂₃ of the under case guide groove 101-G1 are superposed, and is temporarily latched there by a latch mechanism (not shown).

On the other hand, the second axis pin 402, which has moved to the point where the start point P₁₂ of the upper case guide groove 102-G2 and the start point P₁₄ of the under case guide groove 101-G2 are superposed in the first open state, does not change in location during the course of the transition from the first open state to the second open state and consistently stays at the point where the start points P₁₂ and P₁₄ are superposed.

### [Industrial Applicability]

The present invention can be applied to a portable device, mobile telephone, mobile information communication terminal, or the like that can change its shape between three states or more.

### [Reference Signs List]

- 101: First case
- 102: Second case
- 103: Hinge section
- M1, M2: Magnet
- H1, H2: Magnetic sensor

## Claims

1. A state detection device detecting a positional state of a first case and a second case in a portable device, wherein the portable device includes the first case, the second case, and a joint mechanism joining the first and second cases in such a manner that relative positions of the first and second cases can be changed by rotation and shift between a plurality or predetermined positions, **characterized by** comprising:
a plurality of magnetism generation means placed in the first case at a predetermined distance apart from each other in width direction;
a plurality of magnetic sensing means for sensing magnetism from the magnetism generation means, placed in the second case at a predetermined distance apart from each other in length direction; and
a state determination means that determines the positional state of the first and second cases, based on sensed outputs from the plurality of magnetic sensing means.

2. The state detection device according to claim 1, **characterized in that** any one of two magnetism generation means and any one of two magnetic sensing means are locationally superposed in different combinations depending on the plurality of predetermined positions.

3. The state detection device according to claim 2, **characterized in that** the two magnetism generation means generate magnetic poles different from each other and that one of the two magnetic sensing means can sense the different magnetic poles while the other one can sense only the presence/absence of magnetism.

4. The state detection device according to any one of claims 1 to 3, **characterized in that** the state determination means determines which one of the plurality of predetermined positions and a middle state therebetween the first and second cases are in, based on sensed outputs from the plurality of magnetic sensing means.

5. The state detection device according to any one of claims 1 to 4, **characterized in that** the plurality of predetermined positions include at least: a closed state in which at least a particular portion of the first case is covered by the second case; a first open state in which at least the particular portion of the first case is exposed and the length directions of the first and second cases are orthogonal to each other; and a second open state in which at least the particular portion is exposed and the length directions of the first and second cases are aligned, and
a change in position can be made through a rotation operation from any one of the closed state, first open state, and second open state to another.

6. A state detection method for detecting a positional state of a first case and a second case in a portable device, wherein the portable device includes the first case, the second case, and a joint mechanism joining the first and second cases in such a manner that relative positions of the first and second cases can be changed by rotation and shift between a plurality of predetermined positions, **characterized by** comprising:
detecting magnetism from a plurality of magnetism generation means placed in the first case at a predetermined distance apart from each other in width direction by using a plurality of magnetic sensing means placed in the second case at a predetermined distance apart from each other in length direction; and
determining the positional state of the first and second cases, based on sensed outputs from the plurality of magnetic sensing means.

7. The state detection method according to claim 6, **characterized in that** any one of two magnetism generation means and any one of two magnetic sensing means are locationally superposed in different combinations depending on the plurality of predetermined, positions.

8. The state detection method according to claim 7, **characterized in that** the two magnetism generation means generate magnetic poles different from each other and that one of the two magnetic sensing means can sense the different magnetic poles while the other one can sense only the presence/absence of magnetism.

9. The state detection method according to any one of claims 6 to 8, **characterized in that** it is determined which one of the plurality of predetermined positions and a middle state therebetween the first and second cases are in, based on sensed outputs from the plurality of magnetic sensing means.

10. portable device **characterized by** comprising:
a first case;
a second case;
a joint mechanism joining the first and second cases in such a manner that relative positions of the first and second cases can be changed by rotation and shift between a plurality of predetermined positions;
a plurality of magnetism generation means placed in the first case at a predetermined distance apart from each other in width direction;
a plurality of magnetic sensing means for sensing magnetism from the magnetism generation means, placed in the second case at a predetermined distance apart from each other in length direction; and
a state determination means that determines a positional state of the first and second cases, based on sensed outputs from the plurality of magnetic sensing means.

11. The portable device according to claim 10, **characterized in that** any one of two magnetism generation means and any one of two magnetic sensing means are locationally superposed in different combinations depending on the plurality of predetermined positions.

12. The portable device according to claim 11, **characterized in that** the two magnetism generation means generate magnetic poles different from each other and that one of the two magnetic sensing means can sense the different magnetic poles while the other one can sense only the presence/absence of magnetism.

13. The portable device according to any one of claims 10 to 12, **characterized in that** the state determination means determines which one of the plurality of predetermined positions and a middle state therebetween the first and second cases are in, based on sensed outputs from the plurality of magnetic sensing means.

14. The portable device according to any one of claims 10 to 13, **characterized in that** the plurality of predetermined positions include at least: a closed state in which at least a particular portion of the first case is covered by the second case; a first open state in which at least the particular portion of the first case is exposed and the length directions of the first and second cases are orthogonal to each other; and a second open state in which at least the particular portion is exposed and the length directions of the first and second cases are aligned, and
a change in position can be made through a rotation operation from any one of the closed state, first open state, and second open state to another.

15. A program for causing a program-controlled processor to function as a state detection device detecting a positional state of a first case and a second case in a portable device, wherein the portable device includes the first case, the second case, and a joint mechanism joining the first and second cases in such a manner that relative positions of the first and second cases can be changed by rotation and shift between a plurality of predetermined positions, **characterized by** causing the program-controlled processor to implement the functions of:
detecting magnetism from a plurality of magnetism generation means placed in the first case at a predetermined distance apart from each other in width direction by using a plurality of magnetic sensing means placed in the second case at a predetermined distance apart from each other in length direction; and
determining the positional state of the first and second cases, based on sensed outputs from the plurality of magnetic sensing means.

16. The program according to claim 15, **characterized in that** it is determined which one of the plurality of predetermined positions and a middle state therebetween the first and second cases are in, based on sensed outputs from the plurality of magnetic sensing means.
